# EUROPÄISCHE PATENTSCHRIFT

(11) **EP 3 450 813 B1**
(45) Veröffentlichungstag und Bekanntmachung des Hinweises auf die Patenterteilung: **14.10.2020**
(21) Anmeldenummer: 18190289.1
(22) Anmeldetag: 22.08.2018
(51) Int. Cl.: F16L 37/098, F16L 37/10

(54) **VERBINDER FÜR EINE FLUIDLEITUNG**
CONNECTOR FOR A FLUID LINE
RACCORDEMENT POUR UNE CONDUITE DE FLUIDE

(30) Priorität: 31.08.2017 DE 102017119979
(43) Veröffentlichungstag der Anmeldung: 06.03.2019
(73) Patentinhaber: NORMA Germany GmbH, 63477 Maintal (DE)
(72) Erfinder: Unger, Dennis, 63517 Rodenbach (DE); Schindler, René, 63477 Maintal (DE)
(74) Vertreter: Patentanwälte Olbricht Buchhold Keulertz

(56) Entgegenhaltungen:
- DE-T2- 69 101 804
- US-A- 3 312 484
- US-A- 3 747 964
- US-A1- 2015 226 162

## Beschreibung

Die Erfindung betrifft einen Verbinder für eine Fluidleitung mit einem insbesondere einstückigen, rohrförmigen Gehäuse gemäß dem Oberbegriff von Anspruch 1.

In der Automobilindustrie, der Versorgungsindustrie oder in der Lüftungstechnik ist es regelmäßig erforderlich, Rohre, Schläuche, Anschlussstutzen oder anderen Fluidleitungen zu verbinden. Je nach Einsatzgebiet müssen solche Verbindungen Anforderungen zum Beispiel hinsichtlich Druckfestigkeit, Dichtheit, Temperaturbeständigkeit und/oder mechanischer Stabilität erfüllen. Diese Anforderungen können hinsichtlich der Sicherheit einer Anlage kritisch sein, insbesondere dann, wenn solche Verbindungen zum Anschluss von Kraftstofftanks oder in Kühlwasserkreisläufen von Kraftfahrzeugen verwendet werden.

Es ist bekannt, Fluidleitungen wie Schläuche, Rohre, Anschlussstutzen und/oder andere längliche Hohlkörper in vielfältiger Art miteinander zu verbinden. So kann ein Schlauch mit einem Rohr, ein Rohr mit einem Stutzen oder beispielsweise ein Schlauch mit einem Stutzen über einen entsprechenden Verbinder verbindbar sein.

Die US 2015/226162 A1 offenbart einen Verbinder für Fluidleitungen, aufweisend ein rohrförmiges Gehäuse mit einer Aufnahme für einen Stutzen. Ein Drehring umgibt die Aufnahme. Der Drehring ist zur Verriegelung des Verbinders in eine Riegelposition vorgespannt. Der Drehring ist zur Entriegelung in eine Freigabeposition drehbar. In der gezahnten Stirnseite des Gehäuses sind zwischen Montagenasen Leerräume gezeigt, welche bei einer Vormontage des Drehrings als Führungskanäle fungieren. Diesen Leerräumen kann ein Eingang zugesprochen werden.

Aus jeder der DE 691 01 804 T2, US 3 747 964 A und US 3 312 484 A ist ein Verbinder bekannt mit einem Gehäuse und einer Stutzenaufnahme. Ein Drehring umgibt die Aufnahme, der zur Verriegelung des Verbinders dient.

Eine Vorrichtung zum werkzeuglosen Verbinden zweier länglicher Hohlkörper (im Folgenden: Tuben) ist beispielweise in WO 2009 / 082 288 A1 gezeigt. Hierbei ist ein erstes Anschlussstück, an das ein erster Tubus befestigbar ist, als ringförmiges Gehäuse ausgebildet. Dieses erste Anschlussstück weist eine Buchsengeometrie auf. Ein zweites Anschlussstück oder ein zweiter Tubus ist als Stecker ausgebildet und weist eine Steckergeometrie auf. Das zweite Anschlussstück ist entlang einer zentralen Achse in das erste Anschlussstück einführbar und ist mittels der Vorrichtung werkzeuglos ver- und entriegelbar. Hierzu sind gemäß der WO 2009 / 082 288 A1 ein Drehring vorgesehen ein Führungsring und einen O-Ring vorgesehen, die innerhalb des Gehäuses axial nebeneinander angeordnet sind. Der O-Ring ist hierbei in axialer Richtung am weitesten von dem zweiten Anschlussstück entfernt, während der Drehring in axialer Richtung am nächsten an dem zweiten Anschlussstück angeordnet ist. Der Führungsring ist in axialer Richtung zwischen dem O-Ring und dem Drehring angeordnet, wobei in einer radialen Richtung der O-Ring zwischen dem ersten und dem zweiten Anschlussstück, das in das erste Anschlussstück hineinragt, angeordnet ist.

Die Ausgestaltung eines solchen Verbinders erfordert mindestens drei Teile, die relativ zueinander beweglich sein müssen. Zudem ist durch die Anzahl der verschiedenen Teile und die Notwendigkeit, einen Drehring und einen Führungsring vorsehen zu müssen, ein komplexer Aufbau des Verbinders gegeben.

Aufgabe der Erfindung ist es daher einen zuverlässigen, verriegelbaren Verbinder bereitzustellen, der über eine reduzierte Zahl an Einzelteilen verfügt und einen verminderten Aufwand bei dessen Zusammenbau erfordert. Der Verbinder soll mit geringem Materialaufwand kostengünstig und schnell herzustellen sein. Zudem soll der Verbinder platz- und gewichtssparend ausgeführt sein.

Hauptmerkmale der Erfindung sind im kennzeichnenden Teil von Anspruch 1 angegeben. Ausgestaltungen sind Gegenstand der Ansprüche 2 bis 14.

Bei einem Verbinder für eine Fluidleitung, aufweisend ein, rohrförmiges Gehäuse mit einer Aufnahme für einen Stutzen und einen einstückigen, durchgängigen Drehring, der die Aufnahme umgibt, wobei der Drehring zur Verriegelung des Verbinders in eine Riegelposition vorgespannt ist und zur Entriegelung in eine Freigabeposition drehbar ist, ist erfindungsgemäß vorgesehen, dass in der äußeren Mantelfläche des Gehäuses mindestens ein Führungskanal ausgebildet ist, der an einer ersten Stirnseite des Gehäuses einen Eingang aufweist, wobei der Drehring zumindest teilweise in dem Führungskanal aufgenommen ist. In einer vorteilhaften Ausgestaltung ist das Gehäuse einstückig ausgebildet. Hierdurch ergibt sich eine höhere Stabilität des Verbinders.

Erfindungsgemäß ist vorgesehen, dass sich der Führungskanal von dem Eingang aus mit einem bogenförmigen Abschnitt in Richtung einer zweiten Stirnseite des Gehäuses erstreckt.

Erfindungsgemäß ist ebenfalls vorgesehen, dass der bogenförmige Abschnitt in einen stirnseitenparallelen Abschnitt übergeht. Durch eine derartige Ausgestaltung ist der Drehring in einer vorteilhaften Weise und einfach auf das Gehäuse montierbar. Der Drehring wird an den Eingang des Führungskanals angesetzt und durch den bogenförmigen Abschnitt in Richtung der zweiten Stirnseite des Gehäuses axial auf das Gehäuse aufgeschoben. Durch den stirnparallelen Abschnitt ergibt sich für den Drehring eine Führung, entlang derer er in Umfangsrichtung um das Gehäuse rotierbar ist, ohne, dass der Drehring in der axialen Richtung verlagert wird. Durch das Vorsehen des bogenförmigen Abschnitts in Verbindung mit dem stirnseitenparallelen Abschnitt für den Führungskanal ergibt sich in vorteilhafter Weise eine Doppelfunktion. Der bogenförmige Abschnitt dient zur einfachen Montage des Drehrings auf das Gehäuse, während durch den stirnseitenparallelen Abschnitt des Führungskanals eine zuverlässige Führung des Drehrings zum Ver- und Entriegeln gegeben ist. Ergänzend dazu sieht die Erfindung vor, dass der Drehring durch den Führungskanal auf dem Gehäuse in Umfangsrichtung geführt ist. Man erkennt also, dass der Führungskanal eine Führungskulisse ausbildet.

Ferner ist gemäß einer Ausgestaltung der Erfindung vorgesehen, dass sich der Führungskanal entlang eines Umfangabschnitts des Gehäuses erstreckt. Durch das Abschnittsweise Erstrecken des Führungskanals wird erreicht, dass der Kanal in einer Umfangsrichtung begrenzt ist. Auf diese Weise ist eine in Umfangsrichtung liegende Begrenzung für den Drehring vorteilhaft gegeben.

In einer Weiterbildung ist vorgesehen, dass der Drehring entlang des Führungskanals auf das Gehäuse aufschiebbar ist und in die Riegelposition bringbar ist. Somit lässt sich eine leichte Montage des Drehrings auf dem Gehäuse erreichen. Insbesondere lässt sich der Drehring so automatisiert auf das Gehäuse montieren. Durch die Überführung in eine Riegelposition ist der Drehring in einer definierten Stellung, in der er vorgespannt vorliegt. Die Montage des Drehrings auf das Gehäuse endet also in der Riegelposition, in der eine Vorspannung gegen eine Freigabeposition anliegt. Der Drehring ist demnach in einer bevorzugten Ausführungsform aus der Riegelposition nicht mehr über den Führungskanal, insbesondere nicht über den bogenförmigen Abschnitt des Führungskanals demontierbar.

Gemäß einer wichtigen und vorteilhaften Weiterbildung der Erfindung ist vorgesehen, dass die axiale Bewegung des Drehrings durch den Führungskanal begrenzt ist. Auf diese Weise ist in vorteilhafter Art eine einfache und eindeutige Bedienung des Drehrings entgegen dessen Vorspannung gegeben.

In einer Ausbildung ist vorgesehen, dass der Drehring einen Griffteil aufweist. Durch einen Griffteil ist der Drehring in vorteilhafter Weise für einen Benutzer einfach zu greifen. Dies ist insbesondere dann von Vorteil, wenn der Drehring bzw. der Verbinder nicht einsehbar ist und die Bedienung des Verbinders für den Benutzer blind erfolgt. Dies kann beispielsweise in einem Motorraum eines Kraftfahrzeugs der Fall sein. Zudem ist durch einen entsprechend ausgestalteten Griffteil vom Benutzer ein erhöhtes Drehmoment und/oder eine erhöhte Haltekraft auf den Griff übertragbar. Dies gestaltet sich insbesondere dann vorteilhaft, wenn eine besonders sichere Verriegelung des Verbinders erforderlich ist. Bevorzugt ist der Verbinder für diesen Fall mit einer erhöhten Vorspannung versehen. Für den Fall, dass der Verbinder in einem Motorraum eines Kraftfahrzeugs verbaut ist, kann der Griffteil zur Herstellung einer besseren Kraftübertragung vom Benutzer auf den Griff in vorteilhafter Weise beitragen, wenn beispielsweise auf dem Griff befindliche Fluide die Kraftübertragung beeinträchtigen. Daher sieht eine weitere optionale konstruktive Maßnahme vor, dass der Griffteil mindestens zwei in Umfangsrichtung verlaufende, stufenförmige Griffabschnitte aufweist.

Nach einer bevorzugten Ausführungsform ist vorgesehen, dass der Drehring mindestens ein Riegelelement aufweist. Bevorzugt weist der Drehring mehr als sechs Riegelelemente, besonders bevorzugt acht bis zehn Riegelelemente auf. Gemäß einer Weiterbildung der Erfindung ist vorgesehen, dass das Riegelelement in dem Führungskanal einliegt. Dadurch, dass das Riegelelement in dem Führungskanal einliegt, ist der Drehring in dem Führungskanal geführt, während das Riegelelement zur Verriegelung des Verbinders nutzbar ist. Bevorzugt stellt das Riegelelement die alleinige Führung des Drehring in dem Gehäuse dar. Auf diese Weise ist der Führungskanal lediglich zur Aufnahme des Riegelelements auszugestalten, während der Drehring mit einem Ringteil bevorzugt auf der Außenseite der äußeren Mantelfläche aufliegt.

Gemäß einer weiteren vorteilhaften Ausgestaltung ist vorgesehen, dass das Riegelelement eine Federgeometrie aufweist. Eine weitere vorteilhafte Ausgestaltung sieht vor, dass die Federgeometrie als federnde Verbindung des Riegelelements zum Drehring ausgestaltet ist. Eine wichtige Weiterbildung der Erfindung besteht darin, dass das Gehäuse eine Ablaufschräge zum Entriegeln des Verbinders aufweist. Bevorzugt ist vorgesehen, dass zum Überführen des Verbinders in die Freigabeposition der Drehring in Umfangsrichtung gedreht wird und dabei eine Verbindung zwischen Ring und Riegelelement entgegen deren Vorspannung entlang der Ablaufschräge geführt wird. Besonders bevorzugt ist die Ablaufschräge in einer Basis des Führungskanals oder an einem dem Eingang gegenüberliegenden Ende des Führungskanals angeordnet. Durch das Vorsehen einer Federgeometrie wird der Vorteil erreicht, dass der Drehring aus einer Freigabeposition stets in eine Riegelposition überführt wird.

Eine wichtige Weiterbildung der Erfindung besteht darin, dass das Gehäuse eine Ausnehmung aufweist, die als Durchführung durch eine Gehäusewandung ausgebildet ist und eine Basis des Führungskanals durchragt. Bevorzugt ist vorgesehen, dass das Riegelelement in der Riegelposition mit der Ausnehmung in Eingriff steht. Gemäß einer Weiterbildung der Erfindung ist vorgesehen, dass das Riegelelement in der Riegelposition die Ausnehmung durchragt. Eine derartig ausgebildete Aufnahme eignet sich in vorteilhafter Weise dazu, dass der Verbinder ein in den Verbinder eingeschobenen Stutzen, Schlauchteil oder ähnliches verriegelt. Insbesondere ist es vorteilhaft, wenn das Riegelelement mit dem als Ausnehmung ausgeführten Durchführung in Eingriff steht, da so der Drehring in einer Riegelposition gehalten ist. Ein unbeabsichtigtes Entriegeln des Verbinders kann so also nicht stattfinden.

In einer weiteren Ausgestaltung ist vorgesehen, dass sich der Führungskanal in Umfangsrichtung über die Ausnehmung hinweg erstreckt. Hieraus ergibt sich der Vorteil, dass der Drehring über die Ausnehmung hinweg in dem Führungskanal drehbar ist. Besonders bevorzugt wird ein Riegelelement an einer dem Eingang gegenüberliegenden Kante der Ausnehmung über eine Schräge geführt. So lässt sich ein federbelastetes Riegelelement durch eine Drehung des Drehrings in Umfangsrichtung von dem Einlass weg mit der Ausnehmung außer Eingriff bringen, während eine Führung des Drehrings in dem Führungskanal weiterhin gewährleistet ist. Entsprechend ist gemäß einer Ausgestaltung vorgesehen, dass die Basis des Führungskanals an dem dem Eingang gegenüberliegenden Ende des Führungskanals eine Ablaufschräge aufweist. Besonders bevorzugt schließt sich die Ablaufschräge direkt an die Ausnehmung an. Somit ist also gemäß einem weiteren Aspekt der Erfindung vorgesehen, dass die Ausnehmung in dem Führungskanal zwischen dem Eingang und der Ablaufschräge angeordnet ist.

Ein weiterer Aspekt der Erfindung sieht vor, dass zum Überführen des Verbinders in die Freigabeposition der Drehring in Umfangsrichtung gedreht wird und dabei eine Federgeometrie entgegen deren Vorspannung mit der Basis des Führungskanals korrespondiert. In einer Weiterbildung der Erfindung ist vorgesehen, dass die Federgeometrie mit der Ablaufschräge korrespondiert. Auf diese Weise lassen sich ebenfalls die oben beschriebenen Effekte, nämlich die Überführung in eine Freigabeposition und Entsperrung des Verbinders erreichen, während eine Führung des Drehrings durch das Riegelelement in dem Führungskanal gewährleistet bleibt.

Gemäß einer weiteren Ausgestaltung der Erfindung ist vorgesehen, dass der Drehring ein Druckelement aufweist, das einen in den Verbinder einliegenden Schlauch mit dem Verbinder in der Riegelposition verpresst. Durch ein derartig ausgestalteten Verbinder ist sichergestellt, dass eine besonders dichte Verbindung zwischen dem Verbinder und eines in den Verbinder eingesetzten Bauteils, beispielsweise eines Schlauchs oder eines Stutzens gewährleistet ist.

Gemäß einem weiteren Aspekt der Erfindung ist vorgesehen, dass das Gehäuse in der inneren Mantelfläche einen Dichtungssitz für einen Dichtungsring aufweist. Eine weitere Ausgestaltung der Erfindung sieht vor, dass der Dichtungssitz durch einen Kragen oder Absatz gebildet wird, der von der inneren Mantelfläche radial nach innen ragt. Der Dichtungssitz kann bevorzugt ein Dichtungselement aufnehmen, wodurch eine Abdichtung zwischen dem Verbinder und einem in den Verbinder einschiebbaren Stutzen herstellbar ist. Auf diese Weise wird vorteilhaft eine sichere Verbindung durch den Verbinder erreicht.

Weiterhin kann in einer Ausgestaltung vorgesehen sein, dass der Drehring eine Ausformung aufweist, die in eine radiale Einbuchtung in der äußeren Mantelfläche des Gehäuses hineinragt. Durch solche korrespondierenden Elemente ist für den Benutzer von außen leicht erkennbar, ob der Drehring in der Riegelposition oder in der Freigabeposition ist.

Man erkennt, dass der Drehring und/oder das Gehäuse durch Spritzguss hergestellt ist. Dies gestaltete sich insbesondere in Hinblick auf die Herstellkosten vorteilhaft, da Spritzgussteile in großen Stückzahlen schnell und kostengünstig herstellbar sind.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine perspektivische, schematische Ansicht des Verbinders mit aufgesetztem Drehring;
- Fig. 2: eine perspektivische, schematische Ansicht des Drehrings und
- Fig. 3: eine Ansicht des im Aufnahmebereich angeschnittenen Gehäuses.

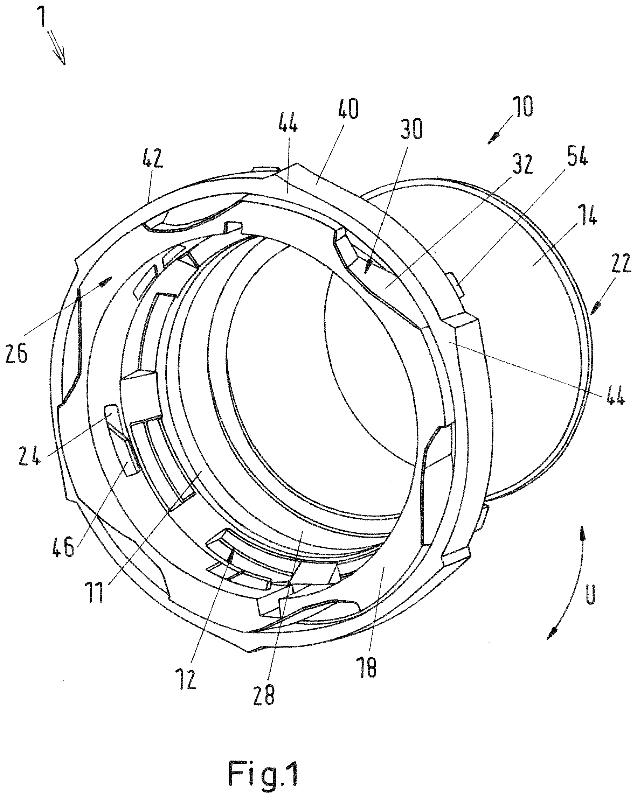

**Fig. 1** zeigt eine perspektivische, schematische Ansicht des Verbinders 1 mit aufgesetztem Drehring 40. Der Verbinder 1 weist ein Gehäuse 10 und einen Drehring 40 auf. Das Gehäuse ist im Wesentlichen zylindrisch ausgebildet und hat eine Gehäusewandung 26 mit einer inneren Mantelfläche 28 und einer äußeren Mantelfläche 14.

Ferner weist das Gehäuse 10 eine Aufnahme 12 an einer ersten Stirnseite 18 auf. Die Aufnahme 12 dient zur Aufnahme eines Schlauchs oder eines Stutzens, der in einen Innenbereich des Gehäuses 10 einschiebbar ist. Der Verbinder 1 verbindet diesen Schlauch oder Stutzen mit einem weiteren Element, das beispielsweise ein Schlauch oder Stutzen sein kann und an dem anderen Ende, beispielsweise an der zweiten Stirnseite 22 des Gehäuses 10, angeordnet ist.

Alternativ zu oder in Kombination mit der in Fig. 1 dargestellten Ausgestaltung kann an der zweiten Stirnseite 22 auch ein Stutzen insbesondere dauerhaft angeschlossen sein. Zudem kann vorgesehen sein, dass das Gehäuse 10 an der zweiten Stirnseite 22 einen Stecker zur Verbindung mit weiteren Leitungselementen aufweist. Alternativ hierzu kann vorgesehen sein, dass das Gehäuse 10 an der zweiten Stirnseite 22 eine Schweißgeometrie aufweist, mit der ein Rohr mit dem Verbinder verbindbar, insbesondere dauerhaft verbindbar ist. In einer weiteren Ausgestaltung ist vorgesehen, dass das Gehäuse 10 an der zweiten Stirnseite 22 einen Sitz für eine Schelle aufweist, wodurch an der zweiten Stirnseite ein Schlauch mit dem Gehäuse 10 bzw. dem Verbinder 1 verbindbar ist.

Gemäß Fig. 1 ist in der inneren Mantelfläche 28 und insbesondere im Bereich der Aufnahme 12 ein Dichtsitz 11 für ein Dichtungselement, beispielsweise ein Dichtring, O-Ring oder ähnliches angeordnet, der als radial nach innen stehender Absatz ausgebildet ist. Die innere Mantelfläche kann außerdem weitere radial nach innen stehende Absätze enthalten, die gegebenenfalls als Anschlag für die in die Aufnahme eingesetzten Schläuche oder Stutzen dienen können.

An der ersten Stirnseite 18 des Gehäuses 10 ist ein Eingang 32 eines Führungskanals angeordnet. Bevorzugt weist das Gehäuse 10 vier bis acht Führungskanäle 30 auf, besonders bevorzugt weist das Gehäuse 10 sechs Führungskanäle 30 auf. Der Führungskanal 30 erstreckt sich auf einer Außenseite des Gehäuses in der Gehäusewandung 26 zunächst mit einem bogenförmigen Abschnitt 34 in Richtung der zweiten Stirnseite 22 des Gehäuses 10. An den bogenförmigen Abschnitt 34 schließt sich ein stirnseitenparalleler Abschnitt 36 an. In der Gehäusewandung erstreckt sich der der Führungskanal 30 in einer Umfangsrichtung U entlang eines Teilumfangsabschnitts. Der Führungskanal 30 liegt in dem Bereich der Aufnahme 12 des Gehäuses 10.

Im Bereich der Aufnahme 12 ist außerdem mindestens eine Ausnehmung 24 angeordnet. Bevorzugt sind in dem Bereich der Aufnahme 12 vier bis acht, besonders bevorzugt sechs Ausnehmungen 24 in Umfangsrichtung U gleichmäßig verteilt. Die Ausnehmung 24 durchragt die Gehäusewandung 26 und mündet in einer Basis des Führungskanals 30, insbesondere in dessen stirnseitenparallelen Abschnitt 36.

Ferner weist der Verbinder einen Drehring 40 auf, der auf der äußeren Mantelfläche 14 des Gehäuses 10 angeordnet ist. Der Drehring 40 ist bevorzugt im Bereich der Aufnahme 12 angeordnet und liegt teilweise in dem Führungskanal 30 ein. Der Drehring 40 weist einen Griffteil 42 auf, der durch stufenförmige Abschnitte 44 gebildet ist. Bevorzugt weist der Griffteil 42 vier bis sechs stufenförmige Abschnitte 44 auf, besonders bevorzugt weist der Griffteil 42 sechs stufenförmige Abschnitte 44 auf. Die Innenseite des Griffteils 42 korrespondiert mit der äußeren Mantelfläche 14 im Bereich der Aufnahme 12 des Gehäuses 10.

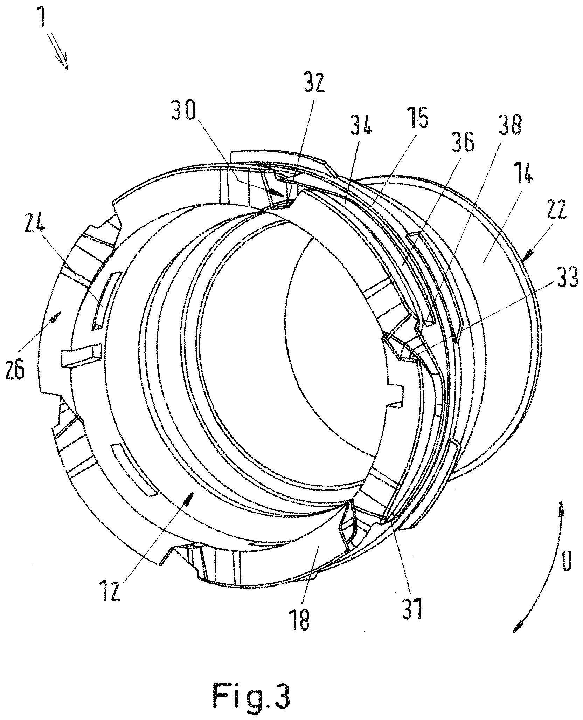

Die stufenförmigen Abschnitte 44 verlaufen in Umfangrichtung U so, dass sich über einen kurzen Umfangsabschnitt des Griffteils 42 der Außendurchmesser von einem Normaldurchmesser erhöht und dann über einen längeren Umfangsabschnitt wieder auf einen Normaldurchmesser erniedrigt. Der Innendurchmesser des Griffteils 42 bleibt dabei gleich und entspricht im Wesentlichen dem Außendurchmesser der äußeren Mantelfläche 14 des Gehäuses 10 im Bereich der Aufnahme 12. Der Griffteil 42 des Drehrings weist weiterhin eine Ausformung 54 auf, die mit dem Gehäuse 10, insbesondere mit einer radialen Einbuchtung 15 (vgl. hierzu Fig. 3) des Gehäuses 10 in Eingriff steht.

Der Drehring 40 weist außerdem mindestens ein Riegelelement 46 auf, das an der Innenseite des Drehrings 40 angeordnet ist. Bevorzugt weist der Drehring 40 vier bis acht Riegelelemente 46 auf, besonders bevorzugt weist der Drehring 40 sechs Riegelelemente 46 auf. Das Riegelelement 46 liegt in dem Führungskanal ein. In einer in Fig. 1 dargestellten Riegelposition ist das Riegelelement 46 mit der Ausnehmung 24 des Gehäuses 10 in Eingriff.

Der Drehring 40 ist also in dem Führungskanal 30 des Gehäuses 10 in Umfangsrichtung U geführt, wobei die Riegelelemente 46 in dem Führungskanal 30 einliegen. Der Drehring 40 kann auf das Gehäuse 10 durch den Eingang 32 des Führungskanals 30 aufgeschoben werden. Dies kann auch mittels automatisierter Prozesse geschehen, da lediglich eine kombinierte translations-rotations-Bewegung erforderlich ist. Dies ist beispielsweise durch Manipulatoren mit mindestens zwei Freiheitsgraden realisierbar.

Der auf dem Gehäuse 10 montierte Drehring 40 ist in Umfangsrichtung U bewegbar (dreh- bzw. rotierbar) und liegt dabei in dem Führungskanal 30 und insbesondere in einem stirnseitenparallelen Abschnitt 36 des Führungskanals 30 ein.

Der Drehring 40 ist in einer Riegelposition mittels seines Riegelelements 46 mit der Ausnehmung 24 des Gehäuses 10 in Eingriff. Der Drehring 40 ist zur Überführung des Verbinders 1 in die Freigabeposition entlang der Umfangsrichtung U in Richtung des dem Eingang 32 gegenüberliegenden Endes 38 des Führungskanals 30 drehbar. Dabei wird das Riegelelement 46 mit der Ausnehmung 24 außer Eingriff gebracht.

Die Drehung des Drehrings 40 ist für einen Benutzer mittels des Griffteils 42, der stufenförmige Abschnitte 44 aufweist, leicht durchzuführen. Die mit der Ausnehmung 24 im Gehäuse 10 in Eingriff stehende Ausformung 54 des Griffteils 42 bzw. des Drehrings 40 zeigt dem Benutzer die Position (Riegelposition oder Freigabeposition) des Verbinders 1 an.

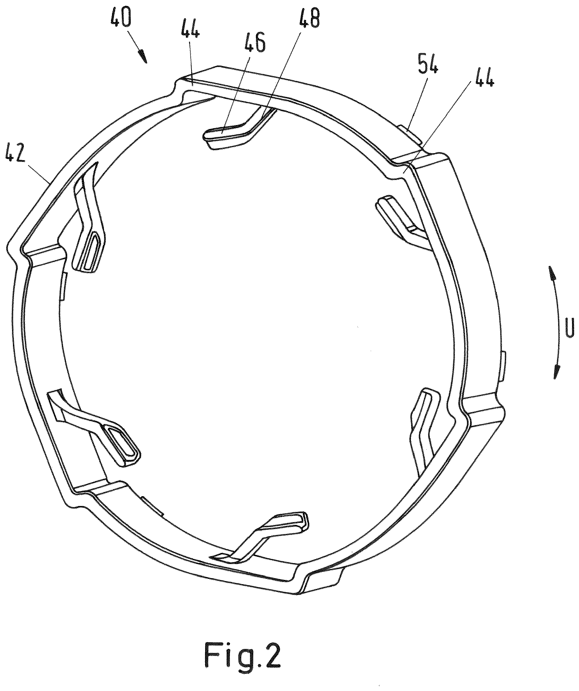

**Fig. 2** zeigt eine perspektivische, schematische Ansicht des Drehrings 40. Wie oben beschrieben, weist der Drehring 40 einen Griffteil 42 auf. An dem Griffteil 42 sind an dessen Innenseite Riegelelemente 46 angeordnet. Diese Riegelelemente 46 sind mittels Federgeometrien 48, die als Stege zwischen dem Riegelelement 46 und dem Griffteil 42 ausgebildet sein können, mit dem Griffteil 42 verbunden. Entgegen den obigen Ausführungen kann der Drehring, wie in Fig. 2 ersichtlich, auch auf dessen Innenseite die stufenförmige Ausgestaltung durch die stufenförmigen Griffabschnitte 44 aufweisen.

**Fig. 3** zeigt eine im Ansicht des im Bereich der Aufnahme 12 angeschnittenen Gehäuses 10. Hier ist zu erkennen, dass der Führungskanal 30 von dessen Eingang 32 über den gebogenen Abschnitt 34 in den stirnseitenparallelen Abschnitt 36 übergeht. Das dem Eingang 32 gegenüberliegende Ende 38 liegt dabei in etwa auf derselben Umfangsposition, wie der Eingang 32 des in der Richtung des Führungskanals 30 benachbarten Führungskanals 30. In der Basis 33 eines jeweiligen Führungskanals 30 ist die als Durchführung durch die Gehäusewandung 26 ausgebildete Ausnehmung 24 vorhanden. Die Ausnehmung 24 liegt in dem stirnseitenparallelen Abschnitt 36 des Führungskanals 30, wobei sich dieser stirnseitenparallele Abschnitt 36 des Führungskanals 30 in beiden Richtungen parallel zur Umfangsrichtung U von der Ausnehmung 24 erstreckt. Alternativ kann vorgesehen sein, dass die Ausnehmung 24 mit einer in Umfangsrichtung U liegenden Seite an das dem Eingang 32 gegenüberliegende Ende 38 des Führungskanals 30 angrenzt.

Eine Ablaufschräge 31 ist an dem dem Eingang 32 gegenüberliegenden Ende 38 des Führungskanals 30 angeordnet und/oder im Bereich der Ausnehmung 24 an der Seite der Ausnehmung 24, die dem dem Eingang 32 gegenüberliegenden Ende 38 des Führungskanals 30 zugewandt ist. Auf dieser Ablaufschräge 31 läuft das Riegelelement 46 bei der Überführung des Verbinders von einer Riegelposition in eine Freigabeposition. Die Ablaufschräge 31 sorgt dafür, dass die Federgeometrie 48 ein- oder ausfedert und somit das Riegelelement 46 in oder außer Eingriff mit der Ausnehmung 24 bringt, wobei gleichzeitig eine Ver- oder Entriegelung des Verbinders 1 stattfindet.

Ferner ist in Fig. 3 die Ausnehmung 15 zu erkennen, mit der die Ausformung 54 des Drehrings 40 zur Anzeige der Riegel- oder Freigabeposition in Eingriff bringbar ist, wenn der Drehring 40 auf dem Gehäuse 10 montiert ist.

Die Erfindung ist nicht auf eine der vorbeschriebenen Ausführungsformen beschränkt, sondern in vielfältiger Weise abwandelbar.

Man erkennt, dass ein Verbinder 1 für eine Fluidleitung ein einstückiges, rohrförmiges Gehäuse 10 aufweist. In dem Gehäuse 10 ist eine Aufnahme 12 für einen Stutzen vorhanden. Die Aufnahme 12 wird von einem einstückigen, durchgängigen Drehring 40 umgeben. Der Drehring 40 ist zur Verriegelung des Verbinders 1 in eine Riegelposition vorgespannt und zur Entriegelung in eine Freigabeposition drehbar. Erfindungsgemäß ist vorgesehen, dass in der äußeren Mantelfläche 14 des Gehäuses 10 mindestens ein Führungskanal 30 ausgebildet ist. Dieser Führungskanal 30 hat an einer ersten Stirnseite 18 des Gehäuses 10 einen Eingang 32. Der Drehring 40 ist zumindest teilweise in dem Führungskanal 30 aufgenommen.

### Bezugszeichenliste

- 1: Verbinder

- 10: Gehäuse
- 11: Dichtungssitz
- 12: Aufnahme
- 14: äußere Mantelfläche
- 15: Einbuchtung
- 18: erste Stirnseite
- 22: zweiten Stirnseite
- 24: Ausnehmung
- 26: Gehäusewandung
- 28: innere Mantelfläche

- 30: Führungskanal
- 31: Ablaufschräge
- 32: Eingang
- 33: Basis
- 34: bogenförmiger Abschnitt
- 36: stirnseitenparalleler Abschnitt
- 38: gegenüberliegendes Ende

- 40: Drehring
- 42: Griffteil
- 44: Griffabschnitt
- 46: Riegelelement
- 48: Federgeometrie
- 54: Ausformung

## Patentansprüche

1. Verbinder (1) für eine Fluidleitung, aufweisend
ein rohrförmiges Gehäuse (10) mit einer Aufnahme (12) für einen Stutzen und
einen einstückigen, durchgängigen Drehring (40), der die Aufnahme umgibt wobei der Drehring (40) zur Verriegelung des Verbinders (1) in eine Riegelposition vorgespannt ist und zur Entriegelung in eine Freigabeposition drehbar ist,
wobei
in der äußeren Mantelfläche (14) des Gehäuses (10) mindestens ein Führungskanal (30) ausgebildet ist, der an einer ersten Stirnseite (18) des Gehäuses (10) einen Eingang (32) aufweist,
wobei sich der Führungskanal (30) von dem Eingang (32) aus mit einem bogenförmigen Abschnitt (34) in Richtung einer zweiten Stirnseite (22) des Gehäuses (10) erstreckt und in einen stirnseitenparallelen Abschnitt übergeht, wobei der Drehring (40) zumindest teilweise in dem Führungskanal (30) aufgenommen ist.

2. Verbinder nach einem der vorhergehenden Ansprüche, **dadurch gekennzeichnet, dass** der Drehring (40) durch den Führungskanal (30) auf dem Gehäuse (10) in Umfangsrichtung (U) geführt ist.

3. Verbinder nach einem der vorhergehenden Ansprüche, **dadurch gekennzeichnet, dass** der Drehring (40) entlang des Führungskanals (30) auf das Gehäuse (10) aufschiebbar ist und in die Riegelposition bringbar ist.

4. Verbinder nach einem der vorhergehenden Ansprüche, **dadurch gekennzeichnet, dass** die axiale Bewegung des Drehrings (40) durch den Führungskanal (30) begrenzt ist.

5. Verbinder nach einem der vorhergehenden Ansprüche, **dadurch gekennzeichnet, dass** der Drehring (40) einen Griffteil (42) aufweist.

6. Verbinder nach Anspruch 5, **dadurch gekennzeichnet, dass** der Griffteil (42) mindestens zwei in Umfangsrichtung (U) verlaufende, stufenförmige Griffabschnitte (44) aufweist.

7. Verbinder nach einem der vorhergehenden Ansprüche, **dadurch gekennzeichnet, dass** der Drehring (40) mindestens ein Riegelelement (46) aufweist.

8. Verbinder nach einem der vorhergehenden Ansprüche, **dadurch gekennzeichnet, dass** das Gehäuse (10) eine Ausnehmung (24) aufweist, die als Durchführung durch eine Gehäusewandung (26) ausgebildet ist und eine Basis (33) des Führungskanals (30) durchragt.

9. Verbinder nach einem der Ansprüche 7 bis 8, **dadurch gekennzeichnet, dass** das Riegelelement (46) in der Riegelposition mit der Ausnehmung (24) in Eingriff steht.

10. Verbinder nach einem der Ansprüche 8 bis 9, **dadurch gekennzeichnet, dass** sich der Führungskanal (30) in Umfangsrichtung (U) über die Ausnehmung (24) hinweg erstreckt.

11. Verbinder nach einem der Ansprüche 8 bis 10, **dadurch gekennzeichnet, dass** die Basis (33) des Führungskanals (30) an dem dem Eingang (32) gegenüberliegenden Ende (38) des Führungskanals (30) eine Ablaufschräge (31) aufweist.

12. Verbinder nach einem der vorhergehenden Ansprüche, **dadurch gekennzeichnet, dass** der Drehring (40) ein Druckelement aufweist, das einen in den Verbinder (1) einliegenden Schlauch mit dem Verbinder (1) in der Riegelposition verpresst.

13. Verbinder nach einem der vorhergehenden Ansprüche, **dadurch gekennzeichnet, dass** das Gehäuse (10) in einer inneren Mantelfläche (28) einen Dichtungssitz (11) für einen Dichtungsring aufweist.

14. Verbinder nach einem der vorhergehenden Ansprüche, **dadurch gekennzeichnet, dass** der Drehring (40) eine Ausformung (54) aufweist, die in eine radiale Einbuchtung (15) in der äußeren Mantelfläche (14) des Gehäuses (10) hineinragt.

## Claims

1. Connector (1) for a fluid line, having a tubular housing (10) with a mount (12) for a support and a one-piece, continuous rotating ring (40), which surrounds the mount, wherein the rotating ring (40) is pretensioned to lock the connector (1) in a locking position and is rotatable for unlocking into a release position, wherein at least one guide channel (30) is formed in the outer lateral surface (14) of the housing (10), which has an inlet (32) at a first end face (18) of the housing (10), wherein the guide channel (30) extends from the inlet (32) with a curved section (34) towards a second end face (22) of the housing (10) and merges into a section parallel to the end face, wherein the rotating ring (40) is at least partially received in the guide channel (30).

2. Connector according to any of the preceding claims, **characterised in that** the rotating ring (40) is guided by the guide channel (30) on the housing (10) in a circumferential direction (U).

3. Connector according to any of the preceding claims, **characterised in that** the rotating ring (40) is slidable along the guide channel (30) on the housing (10) and can be brought into the locking position.

4. Connector according to any of the preceding claims, **characterised in that** the axial movement of the rotating ring (40) is restricted by the guide channel (30).

5. Connector according to any of the preceding claims, **characterised in that** the rotating ring (40) has a grip part (42).

6. Connector according to claim 5, **characterised in that** the grip part (42) has at least two stepped grip sections (44) running in a circumferential direction (U).

7. Connector according to any of the preceding claims, **characterised in that** the rotating ring (40) has at least one locking element (46).

8. Connector according to any of the preceding claims, **characterised in that** the housing (10) has a recess (24), which is formed as a passage through a housing wall (26) and extends through a base (33) of the guide channel (30).

9. Connector according to any of claims 7 to 8, **characterised in that** the locking element (46) is engaged in the recess (24) in the locking position.

10. Connector according to any of claims 8 to 9, **characterised in that** the guide channel (30) extends in a circumferential direction (U) beyond the recess (24).

11. Connector according to any of claims 8 to 10, **characterised in that** the base (33) of the guide channel (30) has an outlet slope (31) at the end (38) of the guide channel (30) opposite the inlet (32).

12. Connector according to any of the preceding claims, **characterised in that** the rotating ring (40) has a pressure element, which presses a tube enclosed in the connector (1) together with the connector (1) in the locking position.

13. Connector according to any of the preceding claims, **characterised in that** the housing (10) has a seal seat (11) for a sealing ring in an inner lateral surface (28).

14. Connector according to any of the preceding claims, **characterised in that** the rotating ring (40) has a moulding (54), which projects in a radial indentation (15) into the outer lateral surface (14) of the housing (10).

## Revendications

1. Connecteur (1) pour une conduite de fluide, présentant un boîtier tubulaire (10) présentant un logement (12) pour une tubulure et une bague tournante continue d'une seule pièce (40) entourant le logement, la bague tournante (40) étant sollicitée dans une position de verrouillage pour verrouiller le connecteur (1) et pouvant être tournée dans une position de déverrouillage pour déverrouiller,
dans lequel au moins un canal de guidage (30) est formé dans la surface d'enveloppe extérieure (14) du boîtier (10), lequel canal de guidage présente une entrée (32) sur une première face frontale (18) du boîtier (10),
dans lequel le canal de guidage (30) s'étend de l'entrée (32) avec une section en forme d'arc (34) en direction d'une seconde face frontale (22) du boîtier (10) et se prolonge par une section parallèle à la face frontale, la bague tournante (40) étant au moins partiellement reçue dans le canal de guidage (30).

2. Connecteur selon l'une quelconque des revendications précédentes, **caractérisé en ce que** la bague tournante (40) est guidée dans la direction circonférentielle (U) à travers le canal de guidage (30) sur le boîtier (10).

3. Connecteur selon l'une quelconque des revendications précédentes, **caractérisé en ce que** la bague tournante (40) peut être poussée sur le boîtier (10) le long du canal de guidage (30) et peut être amenée en position de verrouillage.

4. Connecteur selon l'une quelconque des revendications précédentes, **caractérisé en ce que** le mouvement axial de la bague tournante (40) est limité par le canal de guidage (30).

5. Connecteur selon l'une quelconque des revendications précédentes, **caractérisé en ce que** la bague tournante (40) présente une partie de préhension (42).

6. Connecteur selon la revendication 5, **caractérisé en ce que** la partie de préhension (42) présente au moins deux sections de préhension (44) étagée s'étendant dans la direction circonférentielle (U).

7. Connecteur selon l'une quelconque des revendications précédentes, **caractérisé en ce que** la bague tournante (40) présente au moins un élément de verrouillage (46).

8. Connecteur selon l'une quelconque des revendications précédentes, **caractérisé en ce que** le boîtier (10) présente un évidement (24) qui est formé comme une traversée à travers une paroi de boîtier (26) et qui fait saillie à travers une base (33) du canal de guidage (30).

9. Connecteur selon l'une quelconque des revendications 7 à 8, **caractérisé en ce que** l'élément de verrouillage (46) s'engage avec l'évidement (24) en position de verrouillage.

10. Connecteur selon l'une quelconque des revendications 8 à 9, **caractérisé en ce que** le canal de guidage (30) s'étend dans la direction circonférentielle (U) au-dessus de l'évidement (24).

11. Connecteur selon l'une quelconque des revendications 8 à 10, **caractérisé en ce que** la base (33) du canal de guidage (30) présente une pente d'écoulement (31) à l'extrémité (38) du canal de guidage (30) opposée à l'entrée (32).

12. Connecteur selon l'une quelconque des revendications précédentes, **caractérisé en ce que** la bague tournante (40) possède un élément de pression qui presse un tuyau inséré dans le connecteur (1) avec le connecteur (1) en position de verrouillage.

13. Connecteur selon l'une quelconque des revendications précédentes, **caractérisé en ce que** le boîtier (10) présente un siège d'étanchéité (11) pour une bague d'étanchéité dans une surface d'enveloppe intérieure (28).

14. Connecteur selon l'une quelconque des revendications précédentes, **caractérisé en ce que** la bague tournante (40) présente un façonnement (54) qui fait saillie dans une échancrure radiale (15) de la surface d'enveloppe extérieure (14) du boîtier (10).
